**Europäisches Patentamt**

**European Patent Office**

**Office européen des brevets**

(19)

(11) Veröffentlichungsnummer: **0 027 918**
A1

(12) **EUROPÄISCHE PATENTANMELDUNG**

(21) Anmeldenummer: 80105960.1

(22) Anmeldetag: 02.10.80

(51) Int. Cl.³: **B 32 B 27/00**, B 32 B 31/00,
B 60 R 13/00

(30) Priorität: 12.10.79 DE 2941390

(43) Veröffentlichungstag der Anmeldung: 06.05.81
Patentblatt 81/18

(84) Benannte Vertragsstaaten: DE FR GB IT NL SE

(71) Anmelder: HOECHST AKTIENGESELLSCHAFT,
Postfach 80 03 20, D-6230 Frankfurt/Main 80 (DE)

(72) Erfinder: Greulich, Christian, Müllerstrasse 20,
D-6100 Darmstadt (DE)
Erfinder: Schurr, Ulrich, Florian-Geyer-Strasse 10,
D-6070 Langen (DE)
Erfinder: Wloka, Gerhard, Alzeyer Strasse 54,
D-6230 Frankfurt am Main 80 (DE)

(54) Kunststoff-Verkleidung mit einer textilen Oberfläche und Verfahren zu ihrer Herstellung.

(57) Eine Kunststoff-Verkleidung (1) mit einer textilen Oberfläche, welche aus einem einseitig mit einem Textilmaterial (11) verbundenen Kunststoffträger (14) besteht und deren Kanten nicht gesichert und abgedeckt werden müssen, wird erhalten, wenn man die Ränder (3) entlang eines Filmscharniers (2) in der Kunststoffseite zur Kunststoffseite hin umschlägt und auf dieser Seite – Kunststoff auf Kunststoff – befestigt.

## Kunststoff-Verkleidung mit einer textilen Oberfläche und Verfahren zu ihrer Herstellung

Die vorliegende Anmeldung betrifft eine Kunststoff-Verkleidung mit einer textilen Oberfläche, welche sich z.B. für Abdeckungen eignet, und ein Verfahren zu ihrer Herstellung.

Zur Herstellung von Verkleidungen aus thermoplastischem Kunststoff mit textiler Oberfläche geht man bisher überwiegend von extrudierten Verbundplatten aus, die durch Tiefziehen, Pressen und Stanzen zu den gewünschten Formteilen verarbeitet werden. An den Kanten dieser Formteile tritt die unter der textilen Schicht liegende Kunststoffschicht offen zutage. Abgesehen davon, daß dies unschön aussieht, besteht die Gefahr des Ausfransens und Ablösens der Textilschicht. Die Kanten müssen deshalb in geeigneter Weise gesichert und abgedeckt werden. Dazu werden üblicherweise Keder aus Weich-PVC oder einem ähnlichen elastischen Material, Holzleisten, Metall- oder Kunststoffprofile udgl. verwendet. Bei Verkleidungen und Abdeckungen, bei denen Leisten und Profile aus Sicherheitsgründen nicht erwünscht sind und ihre dekorative Wirkung nicht notwendig ist, wie beispielsweise bei der Automobil-Innenausstattung, bedeutet das Anbringen von elastischen Kedern zusätzlichen Aufwand, da es manuell durchgeführt werden muß.

Es bestand daher die Aufgabe, eine Kunststoff-Verkleidung mit einer textilen Oberfläche zu finden, deren Kanten nicht gesichert und abgedeckt werden müssen.

Es wurde gefunden, daß die Aufgabe dadurch gelöst werden kann, daß man die Ränder entlang eines Filmscharniers in der Kunststoffseite der Verbundplatte nach hinten biegt und befestigt.

Gegenstand der Erfindung ist somit die in den Ansprüchen genannte Kunststoff-Verkleidung und das Verfahren zu ihrer Herstellung.

Die erfindungsgemäße Kunststoff-Verkleidung mit einer textilen Oberfläche besteht aus einem Kunststoffträger, der einseitig mit einem Textilmaterial verbunden ist. Kunststoffträger und Textilmaterial können direkt miteinander verbunden sein, es können sich jedoch zwischen diesen beiden Materialien eine oder mehrere Zwischenschichten befinden.

Der Rand der Kunststoff-Verkleidung ist ringsherum zur Kunststoffseite (= Rückseite) hin umgeschlagen, so daß die sichtbaren Kanten der Verkleidung vom Textilmaterial gebildet werden. Der umgeschlagene Rand wird auf der Rückseite des Trägers - Kunststoff auf Kunststoff- befestigt. Dies kann durch mechanische Mittel, z.B. Heftklammern, durch Verkleben oder durch Verschweißen geschehen. Vorzugsweise ist der umgeschlagene Rand durch Schweißpunkte befestigt. Zur Befestigung der Kunststoff-Verkleidung an einer Unterkonstruktion enthält die Verkleidung geeignete Befestigungselemente, z.B. Laschen, die vorzugsweise am umgeschlagenen Rand angeformt sind.

Für den Träger können als Kunststoffe alle ausreichend schlagfesten Thermoplasten eingesetzt werden, z.B. schlagfest modifiziertes PVC, wie Mischungen von PVC mit chlorierten Polyäthylenen oder Äthylen-Vinylacetat-Mischpolymerisaten, schlagfest modifizierte Polystyrole, wie kautschukmodifiziertes Polystyrol, Styrol-Acrylnitril-Mischpolymerisate oder -Pfropfpolymerisate oder Pfropfpolymerisate von Styrol oder Styrol/Acrylnitril auf Butadien- oder Äthylen-Propylen-Kautschuk. Besonders geeignet sind Polyolefine wie Polyäthylen und Polypropylen und Mischungen von Polyäthylen oder Polypropylen mit kautschukartigen Mischpolymerisaten von Äthylen und Propylen und bis zu 5 Gew.-% Dienen. Die Polymerisate
können bis zu 50 Gew.-%, vorzugsweise 10 bis 40 Gew.-%
bezogen auf die Mischung, Füllstoffe, wie Kreide, Talkum,
Glaskugeln oder Glasfasern enthalten.

Besonders bevorzugt ist eine Mischung von Polypropylen
mit 10 bis 40 Gew.-%, bezogen auf die Gesamtmischung,
Talkum oder Glasfasern.

Das Textilmaterial besteht aus einem Vlies,
Gewirk oder Gestrick, vorzugsweise aus einem Gestrick.

Die für das Textilmaterial geeigneten Fasern bestehen aus
Baumwolle, Cellulosederivaten, linearen Polyestern und
Polyamiden und Mischungen dieser Fasern. Bevorzugt werden
Polyesterfasern und Mischungen von Polyesterfasern mit
Baumwoll- oder Polyamid-Fasern im Verhältnis 10 : 90 bis
90 : 10, vorzugsweise 80 : 20 bis 50 : 50. Das Textilmaterial hat ein Quadratmetergewicht von 90 bis 400, vorzugsweise von 150 bis 250 g.

Soll die Oberfläche einen lederartigen Charakter haben,
so ist es möglich, ein mit Weich-PVC beschichtetes Gestrick einzusetzen. Eine polsterartige Wirkung erhält man,
wen zwischen Textilmaterial und dem Kunststoffträger
eine Schaumschicht eingefügt wird. Geeignet sind Weich-
PVC-Schaumstoffe und weiche Polyurethanschaumstoffe auf
Polyäther- oder Polyesterbasis. Der Schaumstoff hat
vorzugsweise eine Dichte von 30 bis 70 $g/dm^3$. Die
Schaumschicht soll 0,5 bis 8, vorzugsweise 3 - 8 mm dick
sein. Die Unterseite der Schaumschicht wird vorzugsweise
mit netzartigem, dünnen Gestrick beschichtet, um die
Haftung zum Kunststoffträger zu verbessern.

Besonders bewährt haben sich Verkleidungen bzw. Abdekkungen aus einem Verbund einer Oberflächenschicht aus einem dichten Scherplüsch auf Gestrick-Basis, einer **weichen** Polyurethan-Schaumschicht, einem leichten netzartigen, offenen Gestrick aus Polyesterfäden und einem Kunststoffträger aus talkumverstärktem Polypropylen.

Der Verbund von Textilmaterial und Kunststoffträger kann durch Einlegen der textilen Schicht, mit oder ohne Schaumschicht, in eine Spritzgießform und Hinterspritzen mit dem Kunststoff oder durch Extrusionsbeschichten einer textilen Bahn mit dem Kunststoff hergestellt werden. Die Kunststoffträgerschicht hat eine Dicke von 0,5 bis 8, vorzugsweise 2 bis 4 mm.

Aus den durch Extrusionsbeschichten hergestellten Verbundplatten können die gewünschten Formteile durch Tiefziehen mittels Vakuum und/oder Überdruck oder durch Pressen im thermoelastischen Temperaturbereich hergestellt werden.

Damit der Rand der Verbundplatte zur Kunststoffseite hin sauber umgeschlagen werden kann, wird der Kunststoffträger entlang der vorgesehenen Umrißlinie mit einem Filmscharnier versehen, wobei ein Rand von 10 bis 50 mm, vorzugsweise von 10 bis 30 mm vorgesehen wird.

Im Bereich des Filmscharniers wird der Kunststoffträger bis auf eine Dicke von 0,1 bis 1, vorzugsweise 0,4 bis 0,6 mm eingedrückt. Die Breite des Filmscharniers entspricht mindestens dem Dreifachen der Dicke des Kunststoffträgers, um ein einwandfreies Umbiegen um 180° zu ermöglichen. Filmscharniere mit der 3 bis 6-fachen, vorzugsweise 3 bis 4-fachen Breite der Dicke des Kunststoffträgers ergeben nach dem Umbiegen glatte, gut aussehende Kanten.

Um eine unschöne Faltenbildung beim Umbiegen in den Eckbereichen zu vermeiden, werden die überschüssigen Segmente ausgeschnitten. Diese Ausschnitte sollen 1/5 bis 1/2 der Filmscharnierbreite mit überdecken. Dadurch wird erreicht, daß der Rand in den Eckbereichen ohne Überwerfungen umgebogen werden kann, aber doch ganz von dem Textilmaterial bedeckt ist. Die besten Ergebnisse werden erzielt, wenn die Ausschnitte 1/4 bis 1/3 der Filmscharnierbreite überdecken. Bei scharfkantigen Ecken reicht ein entsprechend großer Ausschnitt, bei abgerundeten Ecken sollten zwei oder mehr Ausschnitte gemacht werden.

Wird der Verbund durch Spritzgießen hergestellt, so ist es möglich, den Formteil direkt beim Spritzgießen mit einem Filmscharnier entlang der vorgesehenen Umrißlinie zu versehen. Geht man von einer durch Extrusionsbeschichten hergestellten Verbundplatte aus, so wird zunächst die gewünschte Form durch Pressen oder Tiefziehen hergestellt, anschließend kann das Ausstanzen und Einformen des Filmscharniers gleichzeitig, z.B. mit Ultraschall-Sonotroden durchgeführt werden. Dann werden die Ränder umgebogen und vorzugsweise ebenfalls mit Ultraschall-Sonotroden durch Punktschweißen mit der Rückseite des Formteils verschweißt.

Bei geeigneter Ausführung der Sonotroden und des Auflagetisches kann das Pressen, Ausstanzen und Eindrücken des Filmscharniers in einem Arbeitsgang durchgeführt werden.

Verkleidungen werden üblicherweise mittels angeschweißter Laschen an den zu verkleidenden Teilen, z.B. einer Autokarosserie befestigt. Bei den erfindungsgemäßen Kunststoff-Verkleidungen können beim Ausstanzen an den Stellen, an denen die Teile befestigt werden sollen, laschenartige Verlängerungen am Rand belassen werden, die beim Stanzvorgang direkt mit Löchern für die Befestigungselemente versehen und nach hinten soweit abgebogen werden, daß nach dem Umbiegen und Anschweißen des Randes ein Abstand von 2 - 20, vorzugsweise 5 - 15 mm zwischen Verkleidungsrückwand und Lasche bleibt. Über diese Laschen können dann die erfindungsgemäßen Verkleidungen mittels Schrauben, Spreizstiften, Nieten, Druckknöpfen oder anderen Verbindungselementen direkt an den gewünschten Stellen befestigt werden. Es ist nicht mehr erforderlich, gesondert hergestellte Laschen mit den Teilen zu verschweißen.

Die erfindungsgemäßen Kunststoff-Verkleidungen eignen sich vor allem für die Innenausstattung von Kraftfahrzeugen, z.B. als Türverkleidungen, Hutablagen, Handschuhkästen, Sitzlehnen- und Sitzschalenverkleidungen, Wand- und Himmelverkleidungen oder Kofferraumauskleidungen. Sie können aber auch im Wohnbereich verwendet werden, z.B. als Stuhlsitze und -lehnen und Bettrahmenverkleidungen. Da die Verkleidungen absolut wasserfest sind, sind sie besonders geeignet für Badezimmereinrichtungen und -zubehör, z.B. für Wannenabdeckungen und Wandverkleidungen, Hocker und Waagentrittflächen, und für Gartenmöbel.

Die Erfindung wird nachstehend am Beispiel einer Autotür-Verkleidung weiter erläutert.

Figur 1 zeigt die Autotür-Verkleidung von der Kunststoffseite vor dem Umschlagen des Randes.

Figur 2 zeigt dieselbe Verkleidung nach dem Umschlagen und Befestigen des Randes.

Figur 3 zeigt die Einzelheit "Z" aus Figur 1.

Figur 4 zeigt die Einzelheit "Y" aus Figur 2.

Figur 5 zeigt den Schnitt V-V, Figur 6 den Schnitt VI-VI und Figur 7 den Schnitt VII-VII.

　　　　0027918

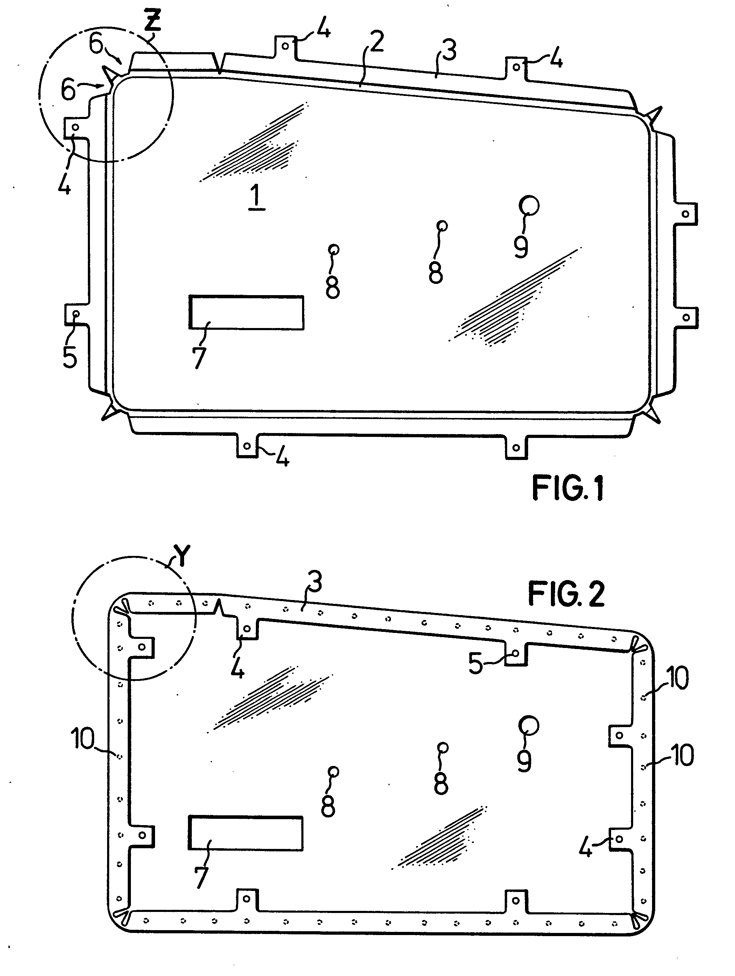

Die Autotür-Verkleidung (1) gemäß Figur 1 ist in bekannter Weise durch Extrusionsbeschichten eines Gestrickes aus Polyesterfasern mit einem 20 Gew.-% Talkum enthaltenden Polpropylen, anschließendem Thermoformen und Austanzen mit gleichzeitigem Einformen des umlaufenden Filmscharniers (2) mittels Ultraschall-Sonotroden, hergestellt worden.

Das Filmscharnier (2) trennt den umzuschlagenden Rand (3) von der übrigen Verkleidung (1). Dieser Rand (3) trägt seinerseits Befestigungslaschen (4) mit den ausgestanzten Löchern (5) für Verbindungselemente. In den Eckbereichen der Verkleidung (1) sind segmentförmige Ausschnitte (6) aus dem Rand (3) ausgestanzt worden. Gleichzeitig mit den Aussenkonturen der Verkleidung (1) wurden auch eine Öffnung (7) für einen Lautsprecher und Löcher (8) für die Griffbefestigung und ein Loch (9) für die Fensterkurbel geschaffen.

Den Zustand der gleichen Autotür-Verkleidung (1) nach Umschlagen des Randes (3) zeigt Figur 2. Der umgeschlagene Rand (3) ist auf der Kunststoffseite durch Ultraschall-Punktschweißungen (10) befestigt.

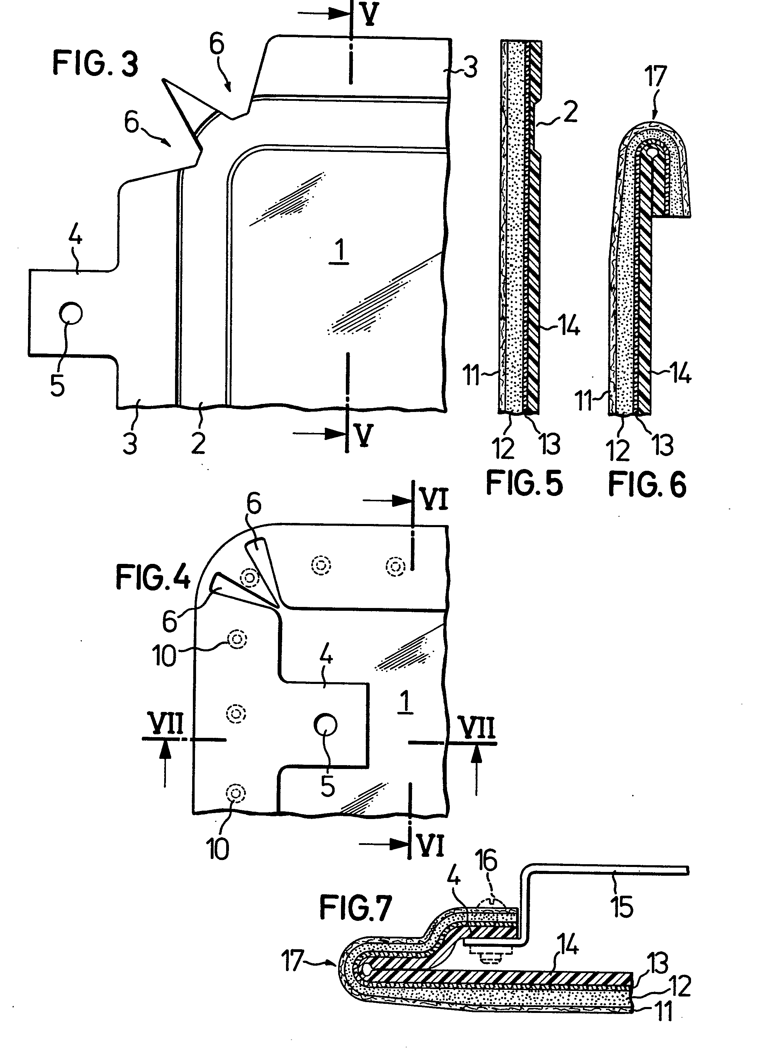

Aus Figur 3, welche die Einzelheit "Z" aus Figur 1 zeigt, ist die Form der Ausschnitte (6) im Eckbereich der Verkleidung vor dem Umschlagen des Randes (3) zu erkennen.

Figur 4 zeigt denselben Eckbereich (= Einzelheit "Y" aus Figur 2) nach dem Umschlagen des Randes (3) und die Punktschweißungen (10) zur Befestigung des Randes (3) an der Kunststoffseite der Verkleidung (1).

Gemäß Figur 5 (= Schnitt V-V) besteht die Kunststoff-Verkleidung aus einem Textilmaterial (11), einer Schaumzwischenlage (12), einem Gestrick (13) als Verbindungsschicht und dem Kunststoffträger (14). Die Breite des Filmscharniers im Kunststoffträger beträgt etwa das Drei- bis Vierfache der Stärke des Kunststoffträgers.

Durch das Umschlagen des Randes (3) zur Kunststoffseite hin ergibt sich eine saubere textile Kante (17), wie der Figur 6 (= Schnitt VI-VI) zu entnehmen ist.

Figur 7 (= Schnitt VII-VII) zeigt eine praktische Befestigung der Autotür-Verkleidung (1) an einem Metallprofil (15). Beim Umschlagen des Randes (3) und Punktschweißen wurde gleichzeitig die Lasche (4) angehoben, so daß sie hinter das Metallprofil (15) greift und mit dem Verbindungselement (16) befestigt werden kann.

Patentansprüche:

1. Kunststoff-Verkleidung mit einer textilen Oberfläche, welche aus einem einseitig mit einem Textilmaterial verbundenen Kunststoffträger besteht, dadurch gekennzeichnet, daß der Rand der Verkleidung ringsherum zur Kunststoffseite hin umgeschlagen und auf dieser Seite - Kunststoff auf Kunststoff - befestigt ist.

2. Kunststoff-Verkleidung nach Anspruch 1, dadurch gekennzeichnet, daß der Kunststoffträger über eine oder mehrere Zwischenschichten mit dem Textilmaterial verbunden ist.

3. Kunststoff-Verkleidung nach Anspruch 1 und 2, dadurch gekennzeichnet, daß der Kunststoffträger aus einem Polypropylen, welches 10 bis 40 Gew.-%, bezogen auf die Gesamtmenge, Talkum enthält, besteht und 0,5 bis 8 mm dick ist, daß das Textilmaterial aus einem Gestrick aus einer Mischung von Polyesterfasern mit Baumwoll- oder Polyamidfasern im Verhältnis 80 : 20 bis 50 : 50 besteht und daß der Kunststoffträger über eine Schaumschicht, welche mit einem netzartigen Gestrick aus Polyesterfäden bedeckt ist, mit dem Textilmaterial verbunden ist.

4. Verfahren zur Herstellung einer Kunststoff-Verkleidung mit einer textilen Oberfläche, welche aus einem einseitig mit einem Textilmaterial verbundenen Kunststoffträger besteht, dadurch gekennzeichnet, daß man einen einseitig mit einem Textilmaterial verbundenen Kunststoffträger entlang der vorgesehenen Umrißlinie mit einem Filmscharnier einer Breite von drei- bis sechsmal der Dicke des Kunststoffträgers versieht, wobei ein Rand von 10 bis 50 mm Breite vorgesehen wird, den Rand unter Vermeidung von Überlappungen in den Eckbereichen ringsherum zur Kunststoffseite hin umschlägt und auf dieser Seite - Kunststoff auf Kunststoff - befestigt.

5. Verfahren nach Anspruch 4, dadurch gekennzeichnet, daß die Kunststoff-Verkleidung durch Hinterspritzen eines in eine Spritzgießform eingelegten Textilmaterials unter gleichzeitiger Formung des Filmscharniers hergestellt wird.

6. Verfahren nach Anspruch 4, dadurch gekennzeichnet, daß man eine einseitig mit einem Textilmaterial beschichtete Kunststoffplatte durch Pressen verformt, mit dem Filmscharnier versieht und gleichzeitig die vorgesehene Form ausstanzt.

7. Verfahren nach Anspruch 4 und 6, dadurch gekennzeichnet, daß beim Ausstanzen am umzubiegenden Rand laschenartige Verlängerungen mit Befestigungslöscher belassen werden.

8. Verfahren nach Anspruch 4 und 6, dadurch gekennzeichnet, daß das Pressen und Eindrücken des Filmscharniers in einem Arbeitsgang mittels Ultraschall-Sonotroden durchgeführt wird.

0027918

FIG.1

FIG.2

FIG. 3

6

6

4

5

V

V

3

2

3

2

1

FIG.5

11

12    13

14

2

FIG.6

17

11

12    13

14

FIG.4

6

6

10

VII

4

1

5

VII

VI

VI

10

FIG.7

4    16

15

17

14

13

12

11

Europäisches
Patentamt

**EUROPÄISCHER RECHERCHENBERICHT**

0027918

Nummer der Anmeldung

EP 80 10 5960

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 856 611 (J.M. MARKLEY)<br><br>* Spalte 2, Zeilen 24-36; Spalte 3, Zeilen 59-68; Spalten 4,5; Spalte 6, Zeilen 1,2, 34-68; Spalte 7; Spalte 8, Zeilen 1-28; Figuren 1-9 *<br><br>-- | 1,3,4 |
| | US - A - 3 544 408 (T.L. SCHENECTADY)<br><br>* Spalte 1, Zeilen 45-68; Spalte 2, Zeilen 1-55; Spalten 3-5; Spalte 6, Zeilen 1-48; Figuren 1-17 *<br><br>-- | 1,3,4 |
| A | US - A - 3 477 759 (D.A. SIMPSON UND R.L. SWIFT) | |
| A | US - A - 2 557 412 (McMILLAN CLEMENTS) | |
| A | GB - A - 760 916 (I. BRAITHWAITE) | |
| A | FR - A - 1 513 312 (ETS. A. MAILLARD)<br><br>----- | |

**KLASSIFIKATION DER ANMELDUNG (Int. Cl.³)**

B 32 B 27/00
31/00
B 60 R 13/00

**RECHERCHIERTE SACHGEBIETE (Int. Cl.³)**

B 32 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 20-01-1981 | VAN THIELEN |

EPA form 1503.1 06.78